# EUROPÄISCHE PATENTSCHRIFT

(11) **EP 1 869 860 B1**
(45) Veröffentlichungstag und Bekanntmachung des Hinweises auf die Patenterteilung: **21.12.2011**
(21) Anmeldenummer: 06708790.8
(22) Anmeldetag: 16.03.2006
(51) Int. Cl.: H04L 29/06

(54) **VERFAHREN ZUM SYNCHRONISIEREN VON INHALTSBEZOGENEN DATENSEGMENTEN VON DATEIEN**
METHOD FOR SYNCHRONISING CONTENT-DEPENDENT DATA SEGMENTS OF FILES
PROCEDE DE SYNCHRONISATION DE SEGMENTS DE DONNEES DE FICHIERS, RELATIFS A UN CONTENU

(30) Priorität: 12.04.2005 DE 102005016866
(43) Veröffentlichungstag der Anmeldung: 26.12.2007
(73) Patentinhaber: SIEMENS AKTIENGESELLSCHAFT, 80333 München (DE)
(72) Erfinder: RANSBURG, Michael, A-9161 Maria Rain (AT); HELLWAGNER, Hermann, A-9020 Klagenfurt (AT); HEUER, Jörg, 82041 Oberhaching (DE); HUTTER, Andreas, 81673 München (DE)
(86) Internationale Anmeldenummer: PCT/EP2006/060808
(87) Internationale Veröffentlichungsnummer: WO 2006/108750

(56) Entgegenhaltungen:
- EP-A- 1 494 430
- US-A1- 2001 052 943
- PATENT ABSTRACTS OF JAPAN Bd. 2003, Nr. 12, 5. Dezember 2003 (2003-12-05) & JP 2004 056777 A (MATSUSHITA ELECTRIC IND CO LTD), 19. Februar 2004 (2004-02-19)
- LI L ET AL: "Multimedia segment delivery scheme and its performance for real-time synchronization control" COMMUNICATIONS, 1994. ICC '94, SUPERCOMM/ICC '94, CONFERENCE RECORD, 'SERVING HUMANITY THROUGH COMMUNICATIONS.' IEEE INTERNATIONAL CONFERENCE ON NEW ORLEANS, LA, USA 1-5 MAY 1994, NEW YORK, NY, USA,IEEE, 1. Mai 1994 (1994-05-01), Seiten 1734-1738, XP010126591 ISBN: 0-7803-1825-0
- PANIS G ET AL: "Bitstream syntax description: a tool for multimedia resource adaptation within MPEG-21" SIGNAL PROCESSING. IMAGE COMMUNICATION, ELSEVIER SCIENCE PUBLISHERS, AMSTERDAM, NL, Bd. 18, Nr. 8, September 2003 (2003-09), Seiten 721-747, XP004452907 ISSN: 0923-5965 in der Anmeldung erwähnt

## Beschreibung

Die Erfindung betrifft ein Verfahren gemäß dem Oberbegriff des Anspruchs 1 und eine Vorrichtung gemäß dem Oberbegriff des Anspruchs 7.

Seit vielen Jahrzehnten werden Fernsehsignale terrestrisch und im Kabel an Fernsehteilnehmer übermittelt. In Europa wird dafür beispielsweise die PAL-Norm und in Nordamerika die NTSC-Norm verwendet. Da alle Fernsehgeräte in den jeweiligen Ländern dazu geeignet sind, das z.B. nach PAL-Norm codierte Fernsehsignal zu empfangen, braucht lediglich ein Fernsehsignal für ein Fernsehprogramm ausgestrahlt werden. Dadurch wird eine Ausstrahlung mehrerer unterschiedlich codierter Fernsehsignale eines Fernsehprogramms, beispielsweise in Abhängigkeit von einer Bildgröße oder einer Leistungsfähigkeit der Fernsehgeräte, nicht benötigt.

Durch die derzeitige Einführung neuer Endgeräte, beispielsweise mobiler Endgeräte mit kleinen Bildschirmen, wird es in der Zukunft nicht mehr möglich sein, ein einziges Fernsehsignal eines Fernsehprogramms für alle Endgeräte zur Verfügung zu stellen. Ferner kann es auch gewünscht sein, unterschiedliche Fernsehteilnehmer mit unterschiedlich qualitativen Fernsehsignalen zu versorgen. Dabei wird beispielsweise für ein Fernsehteilnehmer, der eine niedrige monatliche Gebühr bezahlt, ein gering qualitatives Fernsehsignal zur Verfügung gestellt, beispielsweise in schwarz/weiß, wohingegen bei höherer Gebühr ein hoch auflösendes farbiges Fernsehsignal geliefert wird.

Um diesen Anforderungen gerecht zu werden, wurden in der Vergangenheit sowohl neuartige Datenkompressionsalgorithmen, wie zum Beispiel ein Videocodierstandard ITU-T H.264, als auch Metadatensprachen, wie z.B. XML (XML = Extended Markup Language), entwickelt. Mit Hilfe dieser Metadatensprachen können Inhalte eines Dokuments und/oder eines Datenstroms, wie zum Beispiel eines Fernseh- bzw. Videosignals, mittels einer XML-Schema-Sprachdefinition strukturiert beschrieben werden. Auf Basis dieser Definition können je nach Anforderung Informationen gewonnen werden, mit deren Hilfe eine Skalierung des Fernseh- bzw. Videosignals für verschiedene Fernsehteilnehmer realisiert werden kann.

Aus dem Stand der Technik ist die Verwendung von XML-basierten Beschreibungen von Datenströmen bekannt, bei denen die einzelnen Komponenten des Datenstroms entsprechend ihrer syntaktischen Bedeutung mit BSD-Einheiten (BSD = Bitstream Syntax Description) mit frei adressierbaren gBSD-Einheiten (gBSD=generic Bitstream Description) hinsichtlich unterschiedlicher Adaptionsmöglichkeiten beschrieben bzw. gekennzeichnet werden. Eine ausführliche Beschreibung hierzu findet sich in Panis G. et al., "Bitstream Syntax Description: A Tool for Multimedia Resource Adaptation within MPEG-21", Signal Processing, Image Communication, Elsevier Science Publishers, Amsterdam, NL, Band 18, Nr. 8, September 2003, Seiten 721-747, ISSN: 0923-5965. Diese Beschreibungen des Datenstroms werden genutzt, um den Datenstrom an die Anforderung, zum Beispiel in Hinsicht auf Datenrate oder Qualität eines Fernsehsignals, eines Endteilnehmers, wie z.B. eines Fernsehteilnehmers, zu adaptieren. Dazu kann zunächst die Beschreibung des Datenstroms geeignet transformiert werden, wobei anschließend der Datenstrom basierend auf der transformierten Beschreibung adaptiert wird.

Aus I. Burnett et al., "Bitstream Binding Language - a grammar for Digital Item Transport", ISO/IEC JTC 1/SC 29/WG M11611, Hong Kong, Januar 2005, ist eine Bitstream Binding Language - Verfahren (BBL) bekannt, mit der eine Synchronisation durchgeführt werden kann. Da BBL bei der Fragmentierung von Metadaten auf XPath beruht und eine Beschreibung eines Abschnitts der Metadaten mit XPath eine umfangreiche Datenmenge einnimmt, wird ein großer Overhead durch dieses Verfahren erzeugt. Für die Fragmentierung der Mediadaten wird ein proprietäres Verfahren vorgeschlagen, wodurch eine Synchronisierung verschiedener Datentypen nicht allgemein ermöglicht wird.

In dem Dokument S. Devillers et al., "Metadata streaming use case and requirements", ISO/IEC JTC 1/SC 29/WG11 M11638, Hong Kong, Januar 2005-04-08, werden Anforderungen für streambare digitale Einheiten (streamable digital items) vorgestellt. Diese Anforderungen basieren auf der gBSD-Beschreibung, wobei eine verteilte und dynamische Adaption für Metadaten vorgeschlagen wird.

Aus dem Dokument H. Hellwagner et al., "Report of CE on BitStream Adaptation in Constrained and Streaming Environments", ISO/IEC JTC 1/SC 29/WG 11 M11706, Hong Kong, Januar 2005, sind zwei Verfahren bekannt, bei denen mit Hilfe der gBSD-Beschreibung und der XSLT-Beschreibung eine Adapation von Datenströmen für Streaming-Anwendungen durchführbar ist.

Die Druckschrift EP 1 494 430 A2 beschreibt ein System und ein Verfahren zur Zeitsynchronisation zwischen Multimediadaten und Metadaten. Dabei werden Referenzzeitpunkte in den Multimediadaten und den Metadaten verwendet, welche geeignet korrigiert werden, um eine korrekte Synchronisation sicherzustellen.

In dem Dokument Patent Abstracts of Japan, Bd. 2003, Nr. 12, 5. Dezember 2003 (2003-12-05) & JP 2004 056777 A (MATSUSHITA ELECTRIC IND CO LTD), 19. Februar 2004, ist die Erzeugung eines Datenstroms aus Video- und Audiodaten beschrieben, wobei den Video- und Audio-Daten Synchronisierungsdaten hinzugefügt werden.

Die der Erfindung zugrunde liegende Aufgabe ist ein Verfahren und eine Vorrichtung anzugeben, das bzw. die eine Synchronisation von inhaltsbezogenen ersten und zweiten Datensegmenten in einfacher und standardkonformer Weise ermöglicht.

Diese Aufgabe wird ausgehend von dem Verfahren gemäß dem Oberbegriff des Anspruchs 1 durch dessen kennzeichnende Merkmale und durch eine Vorrichtung ausgehend von dem Oberbegriff des Anspruchs 7 durch dessen kennzeichnende Merkmale gelöst. Bei dem Verfahren zum Synchronisieren von inhaltsbezogenen ersten Datensegmenten einer ersten Datendatei und inhaltsbezogenen zweiten Datensegmenten einer zweiten Datendatei werden die ersten und zweiten Datensegmente jeweils sequenziell entsprechend ihrer zeitlichen Reihenfolge derart ausgegeben werden, dass auf Grundlage einer vorgebbaren Zuordnungsvorschrift für die ersten und zweiten Datensegmente jedes zweite Datensegment zusammen mit einem dazugehörigen ersten Datensegment ausgegeben wird.

Durch das erfindungemäße Verfahren wird es ermöglicht, in einfacher Weise inhaltsbezogene erste und zweite Datensegmente zu synchronisieren. Diese Synchronisation wird gesteuert durch die vorgebbare Zuordnungsvorschrift. Somit können inhaltsbezogene Datensegmente entsprechend ihrer zeitlichen Reihenfolge zusammen ausgegeben werden. Dies ist von Vorteil, da die Zuordnung ohne die Verwendung von Zeitmarken erfolgt. In diesem Zusammenhang ist unter dem Begriff ausgeben zu verstehen, dass erste und zweite Datensegmente bspw. übertragen, gemeinsam gespeichert oder an eine Verarbeitungseinheit weitergegeben werden.

Erfindungsgemäß wird die vorgebbare Zuordnungsvorschrift derart gebildet, dass ein zweites Datensegment genau einem ersten Datensegment zugewiesen wird und eine weitere Zuweisung nach einer Anzahl an sequenziell aufeinander folgenden ersten Datensegmenten erfolgt. Dadurch kann nur durch Angabe der Anzahl die Zuordnungsvorschrift beschrieben werden. Dies ist wegen des sehr geringen Signalisierungsaufwands, der zur Signalisierung der Anzahl benötigt wird, von Vorteil.

In einer alternativen Ausführungsform wird die vorgebbare Zuordnungsvorschrift derart gebildet wird, dass für jedes zweite Datensegment ein erstes Datensegment durch Angabe einer Nummer zugeordnet wird, wobei die Nummer eine Position des ersten Datensegments innerhalb der zeitlichen Reihenfolge der ersten Datensegmente repräsentiert. Hierdurch wird in besonders flexibler Art und Weise die Zuordnung von ersten und zweiten Datensegmenten erreicht. Dabei können einem ersten Datensegment mehrere zweite Datensegmente zugeordnet werden.

Vorzugsweise werden auf Grundlage einer kombinierten vorgebbaren Zuordnungsvorschrift inhaltsbezogene erste Datensegmente und inhaltsbezogene zweite Datensegmente mehrerer zweiter Datendatei synchronisiert. Hierdurch können die zweiten Datensegmente mehrerer Datendateien synchronisiert ausgegeben werden. Die kombinierte vorgebbare Zuordnungsvorschrift ermöglicht eine sehr kompakte und speichereffiziente Beschreibung.

Durch das erfindungsgemäße Verfahren werden durch die erste und/oder zweite Datendatei Mediadaten, insbesondere Video- oder Audiodaten, und/oder Metadaten, insbesondere codiert nach XML-Standard, beschrieben. Somit wird es durch das erfindungsgemäße Verfahren ermöglicht, eine Vielzahl unterschiedlicher Datentypen zu synchronisieren.

Vorzugsweise werden die ersten und/oder zweiten Datensegmente auf Basis der generic bit stream syntax description oder auf Basis der extensible stylesheet language transformation generiert. Mit dieser standardisierten Art und Weise der Generierung der ersten und/oder zweiten Datensegmente kann eine kostengünstige, zuverlässige und standardkonforme Realisierung des erfindungsgemäßen Verfahrens erzielt werden, da die Realisierung auf standardisierte Module zurückgreifen kann.

Ferner ist es in der Praxis zweckmäßig, dass auf Grundlage einer inhaltsbezogenen Markierung bestimmt wird, welches erste und zweite Datensegment zeitlich zuerst ausgegeben wird. Damit kann wahlfrei auf die erste und zweite Datendatei zugegriffen werden. Durch die inhaltsbezogene Markierung wird insbesondere ein Szenenwechsel in einer Bildsequenz oder ein Sprecherwechsel in einer Sprachsequenz gekennzeichnet. Damit kann ein gewünschter Abschnitt einer Sprach- oder Bildsequenz rasch aufgefunden werden, da der Zugriff inhaltsbasiert erfolgt.

Die Erfindung betrifft auch eine Vorrichtung zum Synchronisieren von inhaltsbezogenen ersten Datensegmenten einer ersten Datendatei und inhaltsbezogenen zweiten Datensegmenten einer zweiten Datendatei, mit einem Synchronisationsmodul zum Ausgeben erster und zweiter Datensegmente jeweils sequenziell entsprechend ihrer zeitlichen Reihenfolge, wobei auf Grundlage einer vorgebbaren Zuordnungsvorschrift für die ersten und zweiten Datensegmente jedes zweite Datensegment zusammen mit einem dazugehörigen ersten Datensegment ausgegeben wird. Mit Hilfe der Vorrichtung kann das erfindungsgemäße Verfahren durchgeführt werden.

Weitere Einzelheiten sowie Vorteile der Erfindung werden anhand der Figuren 1 bis 5 näher erläutert. Im Einzelnen zeigen:
- Figur 1: eine Vorrichtung zur Durchführung des erfindungsgemäßen Verfahrens;
- Figur 2: einen Inhalt einer Fragmentierungsbeschreibungsdatei unter Verwendung der XML-Beschreibungssprache, wobei mittels der Fragmentierungsbeschreibungsdatei eine Fragmentierung einer ersten und/oder zweiten Datendatei beschrieben wird;
- Figur 3: ein Baumdiagramm zur bildhaften Darstellung einer Zuordnungsvorschrift;
- Figur 4: einen Inhalt einer Zuordnungsvorschrift, die mit Hilfe der XML-Beschreibungssprache gebildet wird;
- Figur 5: eine zeitliche Anordnung synchronisierter erster und zweiter Datensegmente S1, S2.

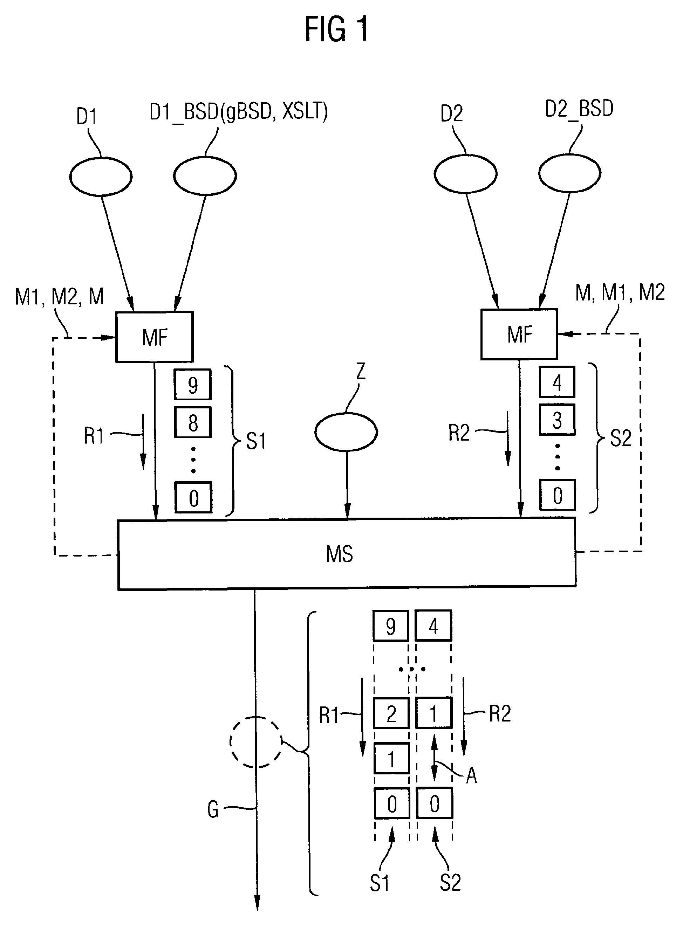

Elemente mit gleicher Funktion und gleicher Wirkungsweise sind in den Figuren 1 bis 5 mit denselben Bezugszeichen versehen.

Das erfindungsgemäße Verfahren wird im Folgenden anhand eines Ausführungsbeispiels gemäß Figur 1 näher erläutert. Hierbei sollen ein Videodatenstrom und ein Audiodatenstrom synchronisiert werden. Der Videodatenstrom ist bspw. nach dem Videocodierstandard MPEG2, MPEG4 oder ITU H.264 komprimiert worden. In Figur 1 wird dieser Videodatenstrom als erste Datendatei D1 gekennzeichnet. Der Audiodatenstrom ist bspw. mit dem Audiocodierstandard ITU G.723.1 oder MPEG4-AAC codiert worden. Der Audiodatenstrom ist in Figur 1 mit einem Namen zweite Datendatei D2 bezeichnet.

Zu jeder ersten und zweiten Datendatei D1, D2 existiert jeweils eine Fragmentierungsbeschreibungsdatei D1_BSD, B2_BSD. Diese Fragmentierungsbeschreibungsdatei D1_BSD, B2_BSD spezifiziert, wie inhaltsbezogene erste und inhaltsbezogene zweite Datensegmente S1, S2 aus der jeweiligen ersten bzw. zweiten Datendatei D1, D2 gewonnen werden können. Unter dem Begriff inhaltsbezogen ist zu verstehen, dass erste bzw. zweite Datensegmente eine syntaktische Bedeutung innerhalb der jeweiligen Datendatei aufweisen, wie z.B. mehrere aufeinander folgende zweite Datensegmente repräsentieren das Sprachsignal eines bestimmten Sprechers innerhalb einer Dialogsequenz. Ferner können darunter auch Abschnitte der Datendatei verstanden werden, wie z.B. einzelne Bilder einer Videosequenz. Im Folgenden beziehen sich Datensegmente immer auf inhaltsbasierte Datensegmente.

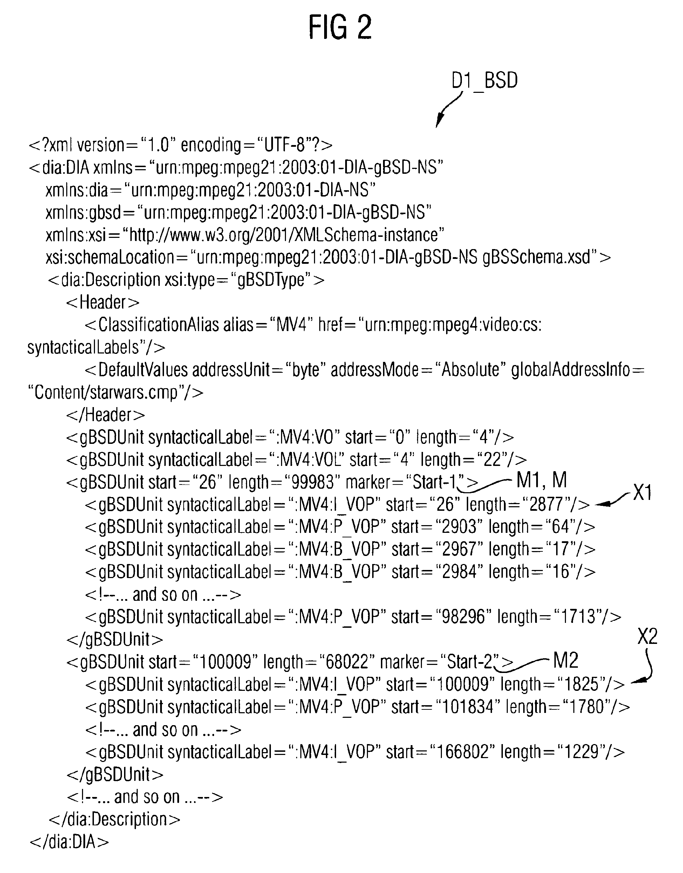

In Figur 2 ist eine erste Fragmentierungsbeschreibungsdatei D1_BSD für eine nach dem Standard MPEG4 codierte erste Datendatei D1 zu sehen. Daten einer derartigen ersten Datendatei D1 sind auch als Mediadaten MID bekannt. Diese erste Fragmentierungsbeschreibungsdatei D1_BSD verwendet zur Darstellung der Fragmentierungsvorschriften eine gBSD-Syntax (gBSD = generic bit stream syntax description), wobei die gBSD-Sytax auf der XML-Spache basiert. So zeigt bspw. die mit einem Bezugszeichen X1 gekennzeichnete Zeile, dass eine Intracodierte Video Object Plane (I-VOP) an einer Byteadresse 26 innerhalb der ersten Datendatei D1 beginnt und 2877 Bytes umfasst. Eine detaillierte Beschreibung der Funktionsweise der gBSD-Sprache ist aus dem Dokument Panis G. et al., "Bitstream Syntax Description: A Tool for Multimedia Resource Adaptation within MPEG-21", Signal Processing, Image Communication, Elsevier Science Publishers, Amsterdam, NL, Band 18, Nr. 8, September 2003, Seiten 721-747, ISSN: 0923-5965, bekannt, wobei die erste Fragmentierungsbeschreibungsdatei D1_BSD mit Figur 9 aus diesem Dokument nahezu identisch ist. Eine andere Möglichkeit zur Beschreibung der Fragmentierungsvorschriften stellt die extensible stylesheet language transformation (XSL-Transformation bzw. XSLT) dar. Hiermit können Metadaten MTD, insbesondere XML-codierte Metadaten, fragmentiert werden. Weitere Information zu XSLT sind dem Dokument Panis G. et al., "Bitstream Syntax Description: A Tool for Multimedia Resource Adaptation within MPEG-21", Signal Processing, Image Communication, Elsevier Science Publishers, Amsterdam, NL, Band 18, Nr. 8, September 2003, Seiten 721-747, ISSN: 0923-5965, entnehmbar.

Gemäß Figur 1 wird die erste Datendatei D1 und die erste Fragmentierungsbeschreibungsdatei D1_BSD einem Fragmentierungsmodul MF zugeführt. Dieses entnimmt aus der ersten Datendatei D1 gemäß der Fragmentierungsvorschrift der ersten Fragmentierungsbeschreibungsdatei D1_BSD erste Datensegmente S1. Diese ersten Datensegmente S1 werden in derjenigen zeitlichen Reihenfolge R1 von dem Fragmentierungsmodul MF an ein Synchronisationsmodul MS übergeben, in der diese ausgegeben werden sollen. Unter den ersten Datensegmenten S1 sind Datensegmente der ersten Datendatei D1 zu verstehen, die eine für die erste Datendatei D1 inhaltsbezogene Bedeutung aufweisen, wie bspw. einzelne Bilder in einer Videosequenz oder einzelne gesprochene Worte in einer Audiosequenz. Dabei kennzeichnet die zeitliche Reihenfolge diejenige Abfolge der einzelnen ersten Datensegmente S1, in der diese bspw. visuell wiedergegeben oder hörbar gemacht werden. Beispielsweise umfasst ein Datensegment das Wort "Guten" und ein weiteres Datensegment das Wort "Morgen", so wird zuerst das Datensegment mit "Guten" und dann dasjenige mit "Morgen" ausgegeben. Diese zeitliche Reihenfolge R1 ist in Figur 1 durch einen Pfeil mit dem Bezugszeichen R1 sinnbildlich dargestellt. Ferner sind in den einzelnen ersten Datensegmente S1 Ziffern abgedruckt, die diese zeitliche Reihenfolge R1 wiedergeben. So wird zuerst das erste Datensegment mit der Ziffer 0, dann dasjenige mit der Ziffer 1 und zuletzt das erste Datensegment mit der höchsten Ziffer, d.h. mit der Ziffer 9 ausgegeben. Die Verwendung dieser Ziffern ist lediglich zur besseren Darstellung des erfindungsgemäßen Verfahrens gewählt worden und stellt keine Anforderung bei der Ausführung des erfindungsgemäßen Verfahrens dar.

Zur Realisierung der Fragmentierung der zweiten Datendatei D2 mittels der zweiten Fragmentierungsbeschreibungsdatei D2_BSD und somit zur Ausgabe der inhaltsbezogenen zweiten Datensegmente S2 in der zeitlichen Reihenfolge R2 wird analog zu den obigen Ausführungen vorgegangen.

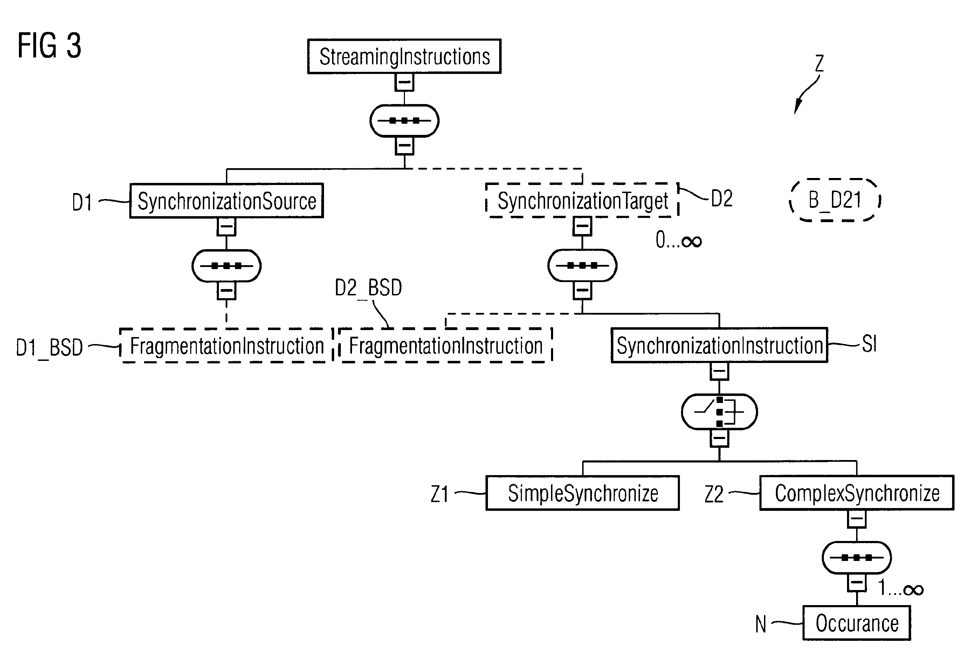

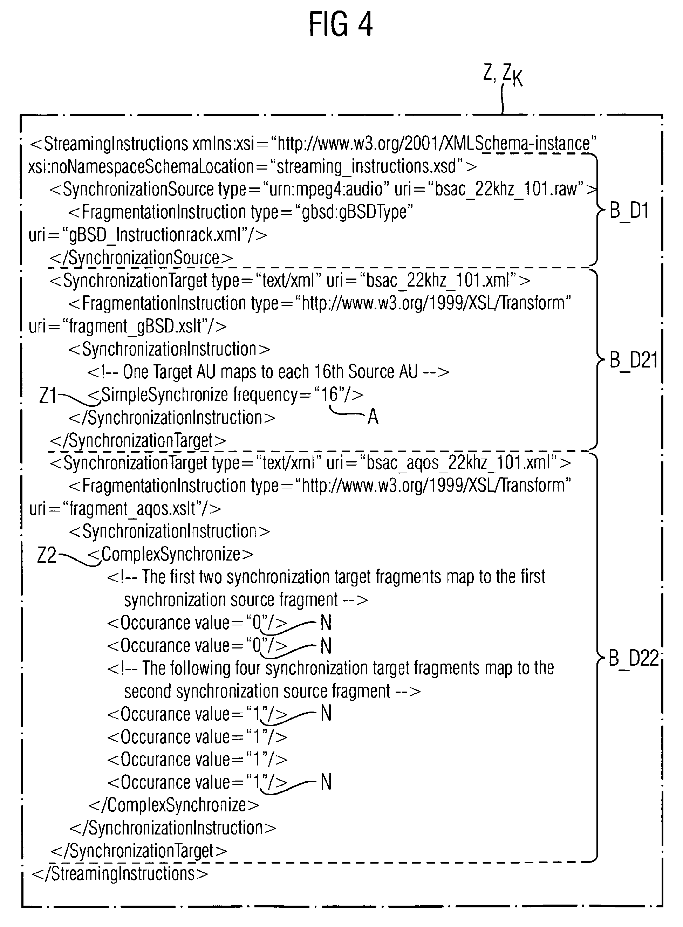

In einem nächsten Verarbeitungsschritt des erfindungsgemäßen Verfahrens werden die ersten und zweiten Datensegmente S1, S2 auf Grundlage einer vorgebbaren Zuordnungsvorschrift Z synchronisiert. In Figur 3 ist in Form einer Baumstruktur ein möglicher Aufbau einer derartigen Zuordnungsvorschrift Z abgebildet. Die Baumstruktur zeigt zum einen durch gestrichelte bzw. durchgezogene Verbindungslinien Abhängigkeiten innerhalb der Zuordnungsvorschrift Z und zum anderen Schlüsselwörter zur Verwendung dieser Zuordnungsvorschrift Z in einer XML-basierten Beschreibungsform. Ein Beginn der Zuordnungsvorschrift Z kann in einem XML-basierten Dokument, wie z.B. in Figur 4 zu sehen, mit einem XML-Startwort "StreamingInstructions" gekennzeichnet werden. Danach folgen die erste Datendatei D1 mit einem XML-Namen "SynchronizationSource" und optional die Fragmentierungsvorschrift durch Angabe der ersten Fragmentierungsbeschreibungsdatei D1_BSD mit einem XML-Namen "FragmentationInstruction". Daneben wird zumindest eine zweite Datendatei D2 mit einem XML-Namen "SynchronizationTarget" definiert, die optibnal die Fragmentierungsvorschrift in Form der zweiten Fragmentierungsbeschreibungsdatei D2_BSD mit einem XML-Namen "FragmentationInstruction" umfasst. Zu jeder zweiten Datendatei D2 wird eine Synchronisierungsinformation SI mit einem XML-Namen "SynchronizationInstruction" angegeben, die die eigentliche Zuordnung der ersten und zweiten Datensegmente S1, S2 definiert.

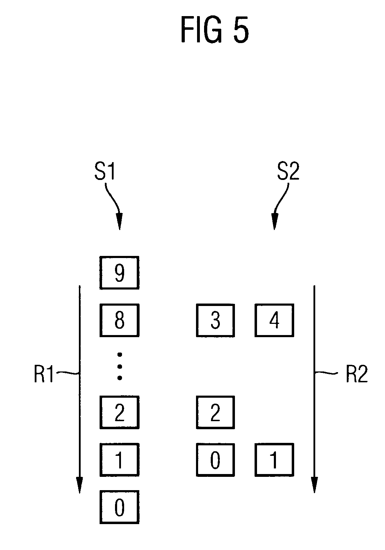

Die Synchronisationsinformation SI kann gemäß dem erfindungsgemäßen Verfahren zwei unterschiedliche Ausprägungen aufweisen.
a) So wird bspw. dem zweiten Datensegment S2 ein erstes Datensegment S1 zugewiesen und eine weitere Zuweisung erfolgt nach einer Anzahl A ausgegebener, sequentiell aufeinander folgender erster Datensegmente S1. Ist die Anzahl A = 2, so bedeutet dies, dass jeweils das zweite erste Datensegment S1 mit dem zweiten Datensegment S2 ausgegeben werden soll. In Figur 1 ist diese Konstellation verdeutlicht. Die ersten und zweiten Datensegmente S1, S2 werden in ihrer zeitlichen Reihenfolge R1, R2 durch das Synchronisationsmodul MS an dessen Datenausgang G ausgegeben. Zunächst werden die jeweils ersten inhaltbezogenen ersten und zweiten Datensegmente S1, S2 mit der Ziffer 0 weitergeleitet. Da die Anzahl A=2, ist wird nun das nächste erste Datensegment S1 mit der Ziffer 1 ausgestoßen. Danach werden jeweils ein erstes und ein zweites Datensegment S1, S2 mit der Ziffer 2 bzw. 1 gemeinsam an dem Datenausgang G herausgegeben. Zum Schluss werden das erste Datensegment S1 mit der Ziffer 9 und das zweite Datensegment mit der Ziffer 4 ausgegeben. Diese Vorgehensweise wird in Figur 3 bzw. 4 mit einem XML-Namen "SimpleSynchronize" und einem Bezugszeichen Z1 gekennzeichnet. In Figur 4 beträgt der Wert der Anzahl A bspw. A=16.
b) Die Verwendung der Anzahl A ermöglicht zum einen, dass lediglich ein einziges zweites Datensegment S2 mit einem ersten Datensegment S1 synchronisiert werden kann. Zum anderen sind die Abstände, in denen ein erstes und ein zweites Datensegment S1, S2 gemeinsam ausgegeben werden können, fest durch die Anzahl A vorgegeben.
   Somit kann in einer alternativen Ausführungsform die vorgebbare Zuordnungsvorschrift Z derart gebildet werden, dass für jedes zweite Datensegment ein erstes Datensegment S1 durch Angabe einer Nummer N zugeordnet wird, wobei die Nummer N eine Position des ersten Datensegments S1 innerhalb der zeitlichen Reihenfolge R1 der ersten Datensegmente S1 repräsentiert.
   Mit Hilfe eines Beispiels gemäß Figur 5 wird diese Alternative näher erläutert. Die ersten und zweiten Datensegmente S1, S2 sollen in der Anordnung gemäß Figur 5 ausgegeben werden. Dazu kann die Zuordnungsvorschrift Z folgende Vorschrift enthalten V={1, 1, 2, 8, 8}. Dies bedeutet, dass das erste und zweite inhaltsbezogene zweite Datensegment S2, also diejenigen mit den Ziffern 0 und 1, mit dem zweiten inhaltsbezogenen ersten Datensegment S1, welches die Ziffer 1 trägt, synchronisiert werden soll. Ferner soll das nächste zweite Datensegment S2 mit der Ziffer 2 mit dem ersten Datensegment S1 mit der Ziffer 2 gemeinsam ausgegeben werden. Schließlich sollen das vierte und fünfte zweite Datensegment S2 mit den Ziffern 3 und 4 mit dem ersten Datensegment mit der Ziffer 8 gemeinsam wiedergegeben werden. Somit beschreibt die obige Vorschrift V={1, 1, 2, 8, 8} für jedes zweite Datensegment S2, und zwar in der zeitlichen Reihenfolge R2, wobei die zeitliche Reihenfolge R2 dem Auslesen dieser Vorschrift V von links nach rechts entspricht, zu welchem ersten Datensegment S1 eine Synchronisation zu erfolgen hat. Dabei entspricht die Zahl innerhalb der Vorschrift der Nummer N, die in diesem Ausführungsbeispiel der Ziffer des ersten Datensegments S1 entspricht.
   In Figur 4 ist die Vorschrift etwas anders dargestellt. Hierbei gilt für die zeitliche Reihenfolge R2 die Vorschrift nicht von links nach rechts sondern von oben nach unten. Das bedeutet, dass die ersten zwei zweiten Datensegmente S2 mit dem ersten Datensegment S1 mit der Nummer 0, die danach folgenden weiteren vier zweiten Datensegmente S2 dem ersten Datensegment S1 mit der Nummer 1 zugeordnet und dann jeweils gemeinsam ausgegeben werden. In Figur 3 ist diese Variante der Zuordnungsvorschrift Z mit einem Bezugszeichen Z2 bzw. einem XML-Namen "ComplexSynchronize" markiert. Mit Hilfe eines XML-Names "Occurance" kann die jeweilige Nummer N in dem XML-Dokument gemäß Figur 4 gekennzeichnet werden, wobei diese Nummer N mehrmals, wie in obiger Vorschrift V gezeigt, auftreten kann.

Die am Datenausgang G ausgegebenen ersten und zweiten Datensegmente S1, S2 können jeweils mit einem RTP-Paket (RTP-Realtime Transport Protocol) verschickt werden, wobei die RTP-Pakete gemeinsam ausgegebener erster und zweiter Datensegmente S1, S2 mit einem identischen Zeitstempel (Zeitstempel = engl. Time code) versehen werden. In einer Alternative können jeweils gemeinsam ausgegebene erste und zweite Datensegmente S1, S2 in einem jeweiligen RTP-Paket gruppiert werden.

In einer alternativen Erweiterung des erfindungsgemäßen Verfahrens kann es zweckmäßig sein, das jeweils zeitlich zuerst auszugebende erste bzw. zweite Datensegment S1, S2 innerhalb der ersten und zweiten Datei D1, D2 auf Grundlage einer Markierung M zu bestimmen. Diese Markierung M gibt an, welches erste bzw. zweite Datensegment S1, S2 aus der dazugehörigen ersten bzw. zweiten Datendatei D1, D2 ausgelesen werden soll. So kann innerhalb der ersten bzw. zweiten Fragmentierungsbeschreibungsdatei D1_BSD, D2_BSD die Markierung M derart abgelegt sein, dass das Fragmentierungsmodul MF eindeutig die richtige Stelle innerhalb der dazugehörigen Datendatei D1, D2 zuordnen kann. Im Beispiel gemäß Figur 2 sind eine erste und eine zweite Markierung M1, M2 eingefügt, wobei die erste Markierung M1 durch einen Text "Start-1" und die zweite Markierung durch einen Text "Start-2" identifiziert werden. So wird bspw. die erste Markierung M1 vom Synchronisationsmodul MS an das Fragmentierungsmodul MF übermittelt, wobei das Fragmentierungsmodul MF daraufhin mit der Bildung des ersten Datensegments S1 in der Zeile mit dem Bezugszeichen X1 startet. Wird die zweite Markierung M2 übermittelt, so beginnt die Erstellung des ersten Datensegments S1 in der Zeile mit einem Bezugszeichen X2.

In den bisherigen Beispielen wurden zwei zu synchronisierende Datendateien D1, D2 betrachtet. Im Allgemeinen können mehr als eine einzige zweite Datendatei D2 mit der ersten Datendatei D1 synchronisiert werden. Beispielsweise gibt es zwei zweite Datendateien D21, D22. Hierfür wird für eine kombinierte vorgebbare Zuordnungsvorschrift Z_{K} gebildet. In dem Beispiel gemäß Figur 4 ist eine derartige kombinierte Zuordnungsvorschrift Z_{K} abgebildet. Ein erster Beschreibungsteil B_D1 beinhaltet Informationen bzgl. der ersten Datendatei D1 bzw. deren erste Datensegmente S1. Ein zweiter Beschreibungsteil B_D21 umfasst Synchronisierungsinformationen für eine erste zweite Datendatei D21 bzw. deren zweite Datensegmenten S2. Ein dritter Beschreibungsteil B_D22 umfasst Synchronisierungsinformationen für die weitere zweite Datendatei D22 bzw. deren zweite Datensegmente S2. Der zweite Beschreibungsteil B_D21 ist gemäß der ersten Zuordnungsvorschrift Z1 und der dritte Beschreibungsteil B_D22 gemäß der zweiten Zuordnungsvorschrift Z2 gebildet worden.

## Patentansprüche

1. Verfahren zum Synchronisieren von inhaltsbezogenen ersten Datensegmenten (S1) einer ersten Datendatei (D1) und inhaltsbezogenen zweiten Datensegmenten (S2) einer zweiten Datendatei (D2), wobei die ersten und zweiten Datensegmente (S1, S2) jeweils sequenziell entsprechend ihrer zeitlichen Reihenfolge (R1, R2) derart ausgegeben werden, dass auf Grundlage einer vorgebbaren Zuordnungsvorschrift (Z) für die ersten und zweiten Datensegmente (S1, S2) jedes zweite Datensegment (S2) zusammen mit einem dazugehörigen ersten Datensegment (S1) ausgegeben wird,
**dadurch gekennzeichnet,**
**dass** die vorgebbare Zuordnungsvorschrift (Z) derart gebildet wird, dass ein zweites Datensegment (S2) genau einem ersten Datensegment (S1) zugewiesen wird und eine weitere Zuweisung nach einer Anzahl (A) an sequenziell aufeinander folgender erster Datensegmente (S1) erfolgt oder dass für jedes zweite Datensegment (S2) ein erstes Datensegment (S1) durch Angabe einer ganzzahligen Nummer (N) zugeordnet wird, wobei die Nummer (N) eine Position des ersten Datensegments (S1) innerhalb der zeitlichen Reihenfolge (R1) der ersten Datensegmente (S1) repräsentiert.

2. Verfahren nach Anspruch 1,
**dadurch gekennzeichnet,**
**dass** auf Grundlage einer kombinierten vorgebbaren Zuordnungsvorschrift (ZK) inhaltsbezogene erste Datensegmente (S1) und inhaltsbezogene zweite Datensegmente (S21, S22) mehrerer zweiter Datendateien (D21, D22) synchronisiert werden.

3. Verfahren nach einem der vorhergehenden Ansprüche,
**dadurch gekennzeichnet,**
**dass** durch die erste und/oder zweite Datendatei (D1, D2) Mediadaten (MID), insbesondere Video- oder Audiodaten, und/oder Metadaten (MTD), insbesondere codiert nach XML-Standard, dargestellt werden.

4. Verfahren nach einem der vorhergehenden Ansprüche,
**dadurch gekennzeichnet,**
**dass** die ersten und/oder zweiten Datensegmente (S1, S2) auf Basis der generic bit stream syntax description (gBSD) oder auf Basis der extensible stylesheet language transformation (XSLT) generiert werden.

5. Verfahren nach einem der vorhergehenden Ansprüche,
**dadurch gekennzeichnet,**
**dass** auf Grundlage einer inhaltsbezogenen Markierung (M) bestimmt wird, welches erste und zweite Datensegment (S1, S2) zeitlich zuerst ausgegeben wird.

6. Verfahren nach Anspruch 5,
**dadurch gekennzeichnet,**
**dass** durch die inhaltsbezogene Markierung (M) ein Szenenwechsel in einer Bildsequenz oder ein Sprecherwechsel in einer Sprachsequenz gekennzeichnet wird.

7. Vorrichtung zum Synchronisieren von inhaltsbezogenen ersten Datensegmenten (S1) einer ersten Datendatei (D1) und inhaltsbezogenen zweiten Datensegmenten (S2) einer zweiten Datendatei (D2), umfassend ein Synchronisationsmodul (MS) zum Ausgeben erster und zweiter Datensegmente (S1, S2) jeweils sequenziell entsprechend ihrer zeitlichen Reihenfolge (R1, R2), wobei auf Grundlage einer vorgebbaren Zuordnungsvorschrift (Z) für die ersten und zweiten Datensegmente (S1, S2) jedes zweite Datensegment (S2) zusammen mit einem dazugehörigen ersten Datensegment (S1) ausgegeben wird,
**dadurch gekennzeichnet,**
**dass** die vorgebbare Zuordnungsvorschrift (Z) derart gebildet ist, dass ein zweites Datensegment (S2) genau einem ersten Datensegment (S1) zugewiesen wird und eine weitere Zuweisung nach einer Anzahl (A) an sequenziell aufeinander folgender erster Datensegmente (S1) erfolgt oder dass für jedes zweite Datensegment (S2) ein erstes Datensegment (S1) durch Angabe einer ganzzahligen Nummer (N) zugeordnet wird, wobei die Nummer (N) eine Position des ersten Datensegments (S1) innerhalb der zeitlichen Reihenfolge (R1) der ersten Datensegmente (S1) repräsentiert.

8. Vorrichtung nach Anspruch 7,
**dadurch gekennzeichnet,**
**dass** mit der Vorrichtung ein Verfahren nach einem der Ansprüche 2 bis 6 durchführbar ist.

## Claims

1. Method for synchronising content-related first data segments (S1) of a first data file (D1) and content-related second data segments (S2) of a second data file (D2), wherein the first and second data segments (S1, S2) are in each case output sequentially according to their chronological sequence (R1, R2) in such a way that each second data segment (S2) is output together with an associated first data segment (S1) on the basis of a predefinable assignment rule (Z) for the first and second data segments (S1, S2),
**characterised in that**
the predefinable assignment rule (Z) is formed in such a way that a second data segment (S2) is assigned to precisely one first data segment (S1) and a further assignment is carried out after a number (A) of sequentially succeeding first data segments (S1) or that each second data segment (S2) is assigned a first data segment (S1) by specification of an integer number (N), where the number (N) represents a position of the first data segment (S1) within the chronological sequence (R1) of the first data segments (S1).

2. Method according to claim 1,
**characterised in that**
content-related first data segments (S1) and content-related second data segments (S21, S22) of a plurality of second data files (D21, D22) are synchronised on the basis of a combined predefinable assignment rule (ZK).

3. Method according to one of the preceding claims,
**characterised in that**
media data (MID), in particular video or audio data, and/or metadata (MTD), in particular encoded according to the XML standard, are represented by the first and/or second data file (D1, D2).

4. Method according to one of the preceding claims,
**characterised in that**
the first and/or second data segments (S1, S2) are generated on the basis of the generic bit stream syntax description (gBSD) or on the basis of the extensible stylesheet language transformation (XSLT).

5. Method according to one of the preceding claims,
**characterised in that**
it is determined on the basis of a content-related marker (M) which first and second data segments (S1, S2) are to be output first in time.

6. Method according to claim 5,
**characterised in that**
a scene change in an image sequence or a change of speaker in a speech sequence is identified by means of the content-related marker (M).

7. Device for synchronising content-related first data segments (S1) of a first data file (D1) and content-related second data segments (S2) of a second data file (D2), comprising a synchronisation module (MS) for outputting first and second data segments (S1, S2) sequentially in each case according to their chronological sequence (R1, R2), wherein each second data segment (S2) is output together with an associated first data segment (S1) on the basis of a predefinable assignment rule (Z) for the first and second data segments (S1, S2),
**characterised in that**
the predefinable assignment rule (Z) is formed in such a way that a second data segment (S2) is assigned to precisely one first data segment (S1) and a further assignment is carried out after a number (A) of sequentially succeeding first data segments (S1) or that each second data segment (S2) is assigned a first data segment (S1) by specification of an integer number (N), where the number (N) represents a position of the first data segment (S1) within the chronological sequence (R1) of the first data segments (S1).

8. Device according to claim 7,
**characterised in that**
a method according to one of claims 2 to 6 can be performed by means of the device.

## Revendications

1. Procédé de synchronisation de premiers segments de données (S1) relatifs à des contenus d'un premier fichier de données (D1) et de deuxièmes segments de données (S2) relatifs à des contenus d'un deuxième fichier de données (D2), les premiers et deuxièmes segments de données (S1, S2) étant produits en sortie respectivement séquentiellement selon leur ordre temporel (R1, R2) de manière telle que, sur la base d'une règle d'association prédéterminable (Z) pour les premiers et deuxièmes segments de données (S1, S2), un segment de données sur deux (S2) est produit en sortie accompagné d'un premier segment de données (S1) associé, **caractérisé en ce que** la règle d'association prédéterminable (Z) est formée de manière telle qu'un deuxième segment de données (S2) est associé à exactement un premier segment de données (S1) et une autre association s'effectue selon un nombre (A) de premiers segments de données (S1) qui se succèdent séquentiellement ou que, pour un segment de données (S2) sur deux, un premier segment de données (S1) est associé par indication d'un numéro entier (N), le numéro (N) représentant une position du premier segment de données (S1) dans l'ordre temporel (R1) des premiers segments de données (S1).

2. Procédé selon la revendication 1, **caractérisé en ce que** sont synchronisés, sur la base d'une règle d'association prédéterminable combinée (ZK), des premiers segments de données (S1) relatifs à des contenus et des deuxièmes segments de données (S21, S22), relatifs à des contenus, de plusieurs deuxièmes fichiers de données (D21, D22).

3. Procédé selon l'une des revendications précédentes, **caractérisé en ce que** sont représentées, par le premier et/ou le deuxième fichiers de données (D1, D2), des données média (MID), et plus particulièrement des données vidéo ou audio, et/ou des métadonnées (MTD), en particulier codées selon le standard XML.

4. Procédé selon l'une des revendications précédentes, **caractérisé en ce que** les premiers et/ou deuxièmes segments de données (S1, S2) sont générés sur la base de la generic bit stream syntax description (gBSD) ou sur la base de l'extensible stylesheet language transformation (XSLT).

5. Procédé selon l'une des revendications précédentes, **caractérisé en ce qu'**il est déterminé, sur la base d'un marquage (M) relatif à des contenus, quel premier et quel deuxième segments de données (S1, S2) sont produits en sortie en premier lieu dans le temps.

6. Procédé selon la revendication 5, **caractérisé en ce qu'**est marqué, par le marquage (M) relatif à des contenus, un changement de scène dans une séquence d'images ou un changement de locuteur dans une séquence vocale.

7. Dispositif de synchronisation de premiers segments de données (S1) relatifs à des contenus d'un premier fichier de données (D1) et de deuxièmes segments de données (S2) relatifs à des contenus d'un deuxième fichier de données (D2), comprenant un module de synchronisation (MS) pour produire en sortie des premiers et deuxièmes segments de données (S1, S2) respectivement séquentiellement selon leur ordre temporel (R1, R2), un segment de données sur deux (S2) étant, sur la base d'une règle d'association prédéterminable (Z) pour les premiers et deuxièmes segments de données (S1, S2), produit en sortie accompagné d'un premier segment de données (S1) associé, **caractérisé en ce que** la règle d'association prédéterminable (Z) est formée de manière telle qu'un deuxième segment de données (S2) est associé à exactement un premier segment de données (S1) et une autre association s'effectue selon un nombre (A) de premiers segments de données (S1) qui se succèdent séquentiellement ou que, pour un segment de données (S2) sur deux, un premier segment de données (S1) est associé par indication d'un numéro entier (N), le numéro (N) représentant une position du premier segment de données (S1) dans l'ordre temporel (R1) des premiers segments de données (S1).

8. Dispositif selon la revendication 7, **caractérisé en ce que** le dispositif permet d'exécuter un procédé selon l'une des revendications 2 à 6.
